# EUROPEAN PATENT APPLICATION

(11) **EP 1 101 602 A1**
(43) Date of publication of application: **23.05.2001**
(21) Application number: 00309784.7
(22) Date of filing: 03.11.2000
(51) Int. Cl.: B32B 3/10, A47B 77/02

(54) **Improved laminate for work tops**

(30) Priority: 04.11.1999 GB 9926171; 15.05.2000 GB 0011716
(71) Applicant: Spekva A/S, 6580 Vamdrup (DK)
(72) Inventor: Nielsen, Per Vincens, Vamdrup, 6580 (DK)
(74) Representative: Suèr, Steven Johannes

(57) **Abstract**

This invention relates to a planar structure, for use as a work top, comprising a plurality of elongate elements (3) coupled together, wherein a space (7) is formed in one or more of the elements, the space being filled with a polymeric composition (4) having expansion/contraction characteristics which are substantially the same as that of the adjacent elements.

## Description

The present invention relates to a planar assembly or laminated structure comprising a plurality of elements or slats often of wood or stone (natural or composite) to form a final structure such as a work top.

Laminated products are well known in the art. They generally comprise an under layer of a sheet material over which is disposed a polymeric material which is both adhesive to, and has a reasonable flexure with respect to, an upper wooden or other surface. The adhesive polymeric layer may be overlaid by a plurality of elongate elements such as wooden slats. Such laminates are used, inter alia, for flooring purposes. When laying such laminates it is usual to allow for a certain expansion or contraction of the flooring laminate and it is therefore only necessary that the polymeric material allows flexure sufficient to accommodate differences in co-efficients of expansion of the elongate elements and sheet materials. Since the amount of flexure is small this can be generally readily accommodated. Laminates of this type are not designed to cope with significant amounts of moisture and indeed the laying of such laminates on a wet surface for example is substantively discouraged.

In this connection, these laminates cannot be used as work surfaces because when a hot pan or moisture contacts the laminate, particularly over a small given area relative to the whole work top, dislocations occur. This occurs in particular because wood is a poor conductor of heat even when wet. Accordingly, local expansion or, in the case of frozen components, contraction is restricted though the particular area experiences extremes of temperature. If laminates known heretofore are utilised, where for example temperature rises locally, there is a local disruption in the interface between the wooden slats and/or stone elements and the polymeric material which can allow moisture ingress. The result of this is that delamination tends to take place eventually. Common areas of such delamination in the kitchen are particularly around sinks and near ovens.

An object of the present invention is to overcome the aforementioned problems to utilise laminates of the foregoing general type on work tops to accommodate both moisture and heat on a regular basis.

According to the present invention there is provided a laminated structure comprising a plurality of elongate elements each conjoined along at least one of their surfaces to an adjacent element and together forming a final structure; characterised in that one or more of said elements have a reduced dimension to form a cavity or space with an adjacent element, the said cavity or space being filled with a polymeric composition having a co-efficient of expansion which is substantially the same as that of an adjacent element.

The present invention addresses the aforementioned problems by removing material from the laminate in its entirety, to leave spaces or cavities within the work top.

Work tops of the present invention are thus formed generally of a plurality of elongate wooden, stone elements, slats or elements adhesively conjoined under pressure (herein known as slats), the plurality of slats having a thickness which is less than the thickness of the overall work top thereby forming a plurality of spaces or cavities within the work top itself. This alleviates the delamination problem because there is a reduction in the differential co-efficients of expansion, but at the price of reducing the area of adhesive conjunction between adjacent slats. This in some circumstances can reduce the working life of the work top because the depth of the adhesive layer is significantly reduced.

The elongate elements may be produced from wood, or stone, said stone may be either natural or composite.

Coefficient of expansion of hard woods including expansion and contraction characteristics such as compression parallel to the grain are preferably between 50 and 65 N/mm², with beech, which has been dried to 12% moisture, for example having a compression parallel to the grain of 56.3 N/mm². Other expansion/contraction characteristics are bending strength of hard wood at about 100 - 130 N/mm² and a modulus elasticity at between 10,000 and 15,000 N/mm²; with Beech having corresponding values of 118 N/mm² and 12,600 M/mm₂.

The co-efficient of expansion may be thermal and/or may result from moisture.

The corresponding movement due to moisture of Beech is 3.1% or 3/8 inch/foot with the radial movement of Beech being 1.7% or 12/64 inch/foot. It will be appreciated that these characteristics of hard and soft woods and indeed similar parameters of natural and composite stone are available to those skilled in the art.

In the preferred form of invention a cavity or space may be formed in its entirety by the juxtaposed elongate elements.

The polymeric composition is also preferably adhesive for the adjacent elements. During transportation, the product of the invention can be exposed to temperatures between -50°C and +50°C and must be able to accommodate these temperatures. However, the final operating temperature of the laminated structure is intended to be between -30° C and +40°C but in general laminated structures having an intended temperature profile of -5°C and +30°C are preferred.

The material from which the wood elements are selected are mainly hardwood such as oak, iroko, teak or beech, but could also be softwoods such as spruce and pine.

The polymeric composition may be selected from a polyurethane or polyurethane foam such as UF-1605 manufactured by United Foam APS.

As for elements of stone these may comprise of natural or composite stone. The different characteristics of expansion and contraction are readily available to those skilled in the art.

In a particularly preferred embodiment, the polymeric composition is based on a polyurethane which may be provided as foam either prior to use or *in situ.* Currently the time required for producing the laminated structure or planar assembly (laminate) is between three and ten minutes and it is much preferred that the process of adding the polyurethane be it foamed or not, is effected in the same time period. To achieve this the foam (e.g polyurethane) may be pre-formed and securely held in place by a separate adhesive layer.

In a variant of this process, the polyurethane foamed or not, may be secured in place by a separate adhesive layer if not self-adhesive, and left proud of the laminate after forming. When fully secure, the laminate is passed through a plane to remove any excess polyurethane and wood or stone as necessary. By use of this method it is possible to cause the insertion of a polymeric material within the same time frame as the lamination step.

In a further embodiment the structure of the invention is provided with conduction means adjacent any source of temperature variation; said means being a good conductor of heat. Such a means may be a heat sink formed of a metal element such as a metal strip e.g. stainless steel. Additionally a conduit for services such as electrical or water conduit may be formed with the metal strip to facilitate servicing.

The invention will now be described, by way of illustration only, with reference to the following examples and the accompanying figures.
Figure 1 shows a portion of a work top for kitchen use in accordance with the present invention in partial transverse cross-section;
Figure 2 shows a portion of work top in accordance with the present invention shown with a portion in transverse cross-section;
Figure 3 shows a transverse cross-section from edge portion of a work top according to the invention.

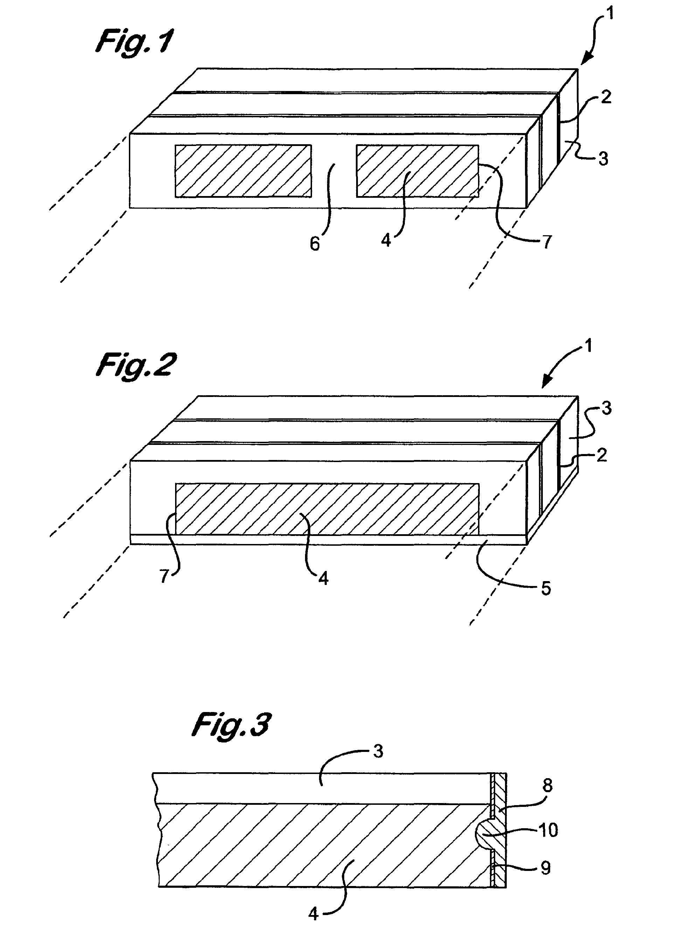

With reference to Figure 1, a plurality of wooden slats 3 formed of Beech are first machined into their correct shapes and adhesively conjoined under pressure by means of an adhesive layer 2 to form work top 1.

In contra-distinction to the prior art, a plurality of cavities or spaces 7, in this case of a rectangular cross-section, are formed within at least one and preferably more than one slat or wooden element 3, preferably with intermediate support 6 formed therein. As will be appreciated the slats 3 are formed in their entirety of solid wood for visual purposes, but they are laminated together by means of adhesive layers to form the work top structure as shown in Figure 1 with cavities or spaces 7 therein.

A polymeric material 4, in this case UF-1605 manufactured in 1999 by United Foam APS, is then filled into the cavities or spaces 7 by means of injection or other means so as to completely fill said cavities or spaces 7. Preferably the polymeric material 4 is at least compatible with the adhesive material 2, but more preferably is the same i.e is adhesive, or of a very similar composition thereto. The polymeric material 4 has a co-efficient of thermal expansion but also expands in response to moisture in a way which approximates to the expansion experienced by pitch pine or Beech in response to the same stimulation. The support 6 which may be interposed at regular intervals throughout the length of the slat 3 is formed to ensure that the work top as a whole maintains a structural integrity during manufacture and generally strengthens the structure during use. The polymeric material may be selected from a polyurethane. Where the material is Beech, the foam has at least one of the following characteristics: 55-58 N/mm² - compression parallel to the grain at 12% moisture, 115 to 121 N/mm² - bending strength, 12,000 to 13,000 N/mm² - modulus of elasticity.

With reference to Figure 2 wherein the same numbering denotes a similar element, Figure 2 differs from Figure 1 in that its manufacturing process and final form are a little different. In Figure 2 the cavity or space 7 is formed in one surface of the formed wooden or stone slats after they have been laminated together under pressure. The cavity or space 7 is machined from the resultant whole to leave a generally U shaped configuration. The work top 1 is then laid with its upper surface downwardly thereby exposing the cavity or space 7. Polymeric material, selected from those given above, is placed in cavity or space 7 which when absolutely full may either be overlaid by means of a wooden or stone over-layer 5 which is adhesive to the polymeric material 4 and to the edges of the slats 3, to form the final work top structure, or may be left just proud of the lower surface of the wooden element, allowed to fully harden if not already formed and then planed to give a plane but partially foamed under surface.

With reference to Figure 3 a wood or stone slat 3 overlays a polymeric foam layer 4 as shown in Figures 1 and 2 above. However, a stainless steel edge portion 8 in the form of a strip is formed adjacent the edges of the foam and wood/stone composite. In addition, the edge portion 8 is preferably adhesively conjoined at 9 over the interface between the foam and wood/stone element. Alternatively the edge portion 8 may be formed with, or overlay, a conduit 10 for ready servicing of electrical or water supplies.

In use, the steel strip increases the strength of the work top while also acting as a heat sink if the localised temperature of the work top is raised or indeed lowered.

It has been found in accordance with the present invention that since polymeric material has become cheaper than high quality wood, the cost of the work top of the invention is significantly reduced with no reduction in visual appeal or strength.

It will be understood that the embodiment illustrated shows one application of the invention only for the purposes of illustration. In practice the invention may be applied to many different configurations, the detailed embodiments being straightforward for those skilled in the art to implement.

## Claims

1. A laminated structure (1) comprising a plurality of elongate elements (3) each conjoined along at least one of their surfaces to an adjacent element and together forming a final structure; characterised in that one or more of said elements have a reduced dimension to form a cavity (7) with an adjacent element, the said cavity being filled with a polymeric composition (4) having a co-efficient of expansion which is substantially the same as that of an adjacent element.

2. A structure according to Claim 1 wherein the elements are formed of wood or natural or composite stone.

3. A structure according to Claim 1 or 2 wherein the cavity (7) is formed by juxtaposed elongate elements disposed on 4 or 5 of 6 sides.

4. A structure according to any preceding claim including a good conductor of heat (8) overlaying an interface between adjacent elements, and/or the polymeric composition.

5. A structure according to claim 4 wherein the good conductor of heat is a metal strip disposed on at least one edge of the structure.

6. A structure according to any preceding claim wherein the polymeric composition (4) is also adhesive for adjacent elements.

7. A structure according to any preceding claims wherein the polymeric composition is selected from a polyurethane foam having at least one of the following parameters, 1) coefficient of expansion (compression parallel to the grain) 50 to 65 N/mm², 2) bending strength 100 to 130 N/mm², 3) modulus elasticity 10,000 to 15,000 N/mm².

8. A structure according to any of claims 2 to 7 wherein the wooden elements are selected from Beech or Pitch Pine.

9. A structure according to any preceding claim wherein the final operating temperature of the laminated structure is intended to be between -50°C and +50°C.

10. A structure according to Claim 9 wherein the temperature of the laminated structure is intended to be between -5°C and +30°C.

11. A wood and polymer work top formed of a structure according to any one of Claims 1 to 10.

12. A stone and polymer work top formed of a structure according to any of Claims 1 to 10.

13. A planar assembly (1) comprising a plurality of elongate elements (3) coupled together, wherein a space (7) is formed in one or more of the elements, the space being filled with a polymeric composition (4) having expansion/contraction characteristics which are substantially the same as that of the adjacent elements.
